# EUROPÄISCHE PATENTSCHRIFT

(11) **EP 4 321 359 B1**
(45) Veröffentlichungstag und Bekanntmachung des Hinweises auf die Patenterteilung: **22.05.2024**
(21) Anmeldenummer: 22189313.4
(22) Anmeldetag: 08.08.2022
(51) Int. Cl.: B60J 1/14

(54) **FENSTERKONSTRUKTION FÜR EIN WOHN- BZW. REISEMOBIL**
WINDOW STRUCTURE FOR A MOBILE HOME OR CAMPER VAN
STRUCTURE DE FENÊTRE POUR UNE CARAVANE OU UN CAMPING-CAR

(43) Veröffentlichungstag der Anmeldung: 14.02.2024
(73) Patentinhaber: Beck, Georg, 45731 Waltrop (DE); Penner, Johann, 45731 Waltrop (DE)
(72) Erfinder: Beck, Georg, 45731 Waltrop (DE); Penner, Johann, 45731 Waltrop (DE)
(74) Vertreter: Weisbrodt, Bernd

(56) Entgegenhaltungen:
- WO-A1-2008/068325
- CN-U- 209 096 435
- DE-U1- 20 113 938
- GB-A- 2 502 843
- US-A- 1 721 223
- US-A- 5 467 557

## Beschreibung

Die vorliegende Erfindung betrifft eine Fensterkonstruktion für ein Wohn- bzw. Reisemobil mit den Merkmalen des Oberbegriffs des Anspruchs 1.

Ein Wohn- bzw. Reisemobil im Sinne der vorliegenden Erfindung ist ein Kraftfahrzeug mit einer zum Wohnen geeigneten Inneneinrichtung, welche häufig insbesondere der eines Wohnwagens ähnelt. Wohn- bzw. Reisemobile werden dabei als Freizeitfahrzeuge zum Camping und/oder für Urlaube mit wechselnden Stand- und/oder Erlebnisorten eingesetzt oder beispielsweise von Geschäftsreisenden wie Handelsvertretern, Montagearbeitern oder dergleichen zum Übernachten oder als mobiles Büro an wechselnden Arbeitsorten verwendet.

Mit Wohn- bzw. Reisemobil wird ein bewohnbares Fahrzeug (Essen zubereiten, Schlafen, ggfs. mit Dusche und/oder Toilette) bezeichnet, dessen Schwerpunkt jedoch auf dem Reisen, also dem Fahren bzw. Standortswechseln, liegt. In aller Regel sind es ausgebaute Kleinbusse und/oder Kastenwagen, weshalb diese Fahrzeuge auch oft als Campingbus oder auch übergreifend als Camper bezeichnet werden. Heutzutage werden in Deutschland die Begriffe Reisemobil bzw. Wohnmobil jedoch synonym verwendet, wobei in Herstellerkatalogen und Fachzeitschriften meist von Reisemobil, umgangssprachlich jedoch überwiegend von Wohnmobil - und auch von Camper oder Campermobil - gesprochen wird. Reise- bzw. Wohnmobile im ursprünglichen Sinne werden unter Kastenwagen behandelt.

Zulassungstechnisch ist diese Gruppe von Fahrzeugen eine eigene Fahrzeugart und wird in den Zulassungsbescheinigungen, sofern eine neue EU-Typgenehmigung vorliegt, einheitlich als Wohnmobil bezeichnet; frühere Bezeichnungen wie So.-Kfz für sonstiges Kfz fallen damit weg bzw. sind entfallen.

Aus dem Stand der Technik sind Fenster für Wohn- bzw. Reisemobile bekannt, welche einen Luftaustausch zwischen dem Wohn- bzw. Reisemobil und der Umgebung ermöglichen. Dabei wird prinzipiell zwischen so genannten Ausstellfenstern und Schiebefenstern unterschieden.

Ausstellfenster werden in vorhandene Außenwände von Reisemobilen eingesetzt, was eine präzise und somit besonders zeitaufwändige Montage erforderlich macht. Insbesondere müssen passgenaue Öffnungen erstellt und eine zuverlässige Abdichtung zwischen Außenwand und Komponenten des Ausstellfensters sichergestellt werden. Hinzukommt, dass derartige Ausstellfenster nur einen relativ begrenzten Eintritt von Tageslicht in das Innere des Reisemobils ermöglichen.

Die GB 2502843 A offenbart eine gattungsgemäße Verglasung für einen Omnibus oder eine Straßenbahn, wobei eine in der Hauptfensterscheibe vorgesehene Fensteröffnung durch Verschieben bzw. Verdrehen einer weiteren Fensterscheibe zu öffnen bzw. zu verschließen ist.

Die WO 2008/068325 A1) offenbart ein Glasschiebedach für ein Kraftfahrzeug und beschreibt ein verglastes Karosserieoberteil eines Kraftfahrzeugs, mit einer Öffnung, welche durch Verschieben eines verschiebbaren Elements aus Glas zu öffnen bzw. zu verschließen ist.

Die DE 201 13 938 U1 offenbart ein ausstellbares Fahrzeugfenster aus Kunststoff, beispielsweise organischem Glas oder Polycarbonat (PC) für Wohnwagen und Wohnmobile. Das Fahrzeugfenster ist in einer Aussparung einer Fahrzeugwand des Wohnwagens bzw. Wohnmobils mittels eines äußeren Rahmenelements befestigt. Dabei ist das Fahrzeugfenster an einer Seite des Rahmenelements scharnierartig verschwenkbar angeordnet.

Gleiches scheint für die CN 209 096 435 U zu gelten.

Vor diesem Hintergrund liegt der vorliegenden Erfindung die Aufgabe zugrunde, eine Lösung bereitzustellen, welche die vorgenannten Nachteile ausräumt und eine Fensterkonstruktion bereitstellt, mittels welcher die Montage von Ausstellfenstern vereinfacht wird und insbesondere eine Verbesserung in Hinblick auf einen Luftaustausch zwischen dem Innenraum des Wohn- bzw. Reisemobils und der Umgebung, einen Einlass von Tageslicht, akustische und mechanische Eigenschaften als auch eine Glas-Optik erreicht werden kann.

Erfindungsgemäß wird diese Aufgabe gelöst durch eine Fensterkonstruktion für ein Wohn- bzw. Reisemobil, mit den Merkmalen des Anspruchs 1.

Die Hauptfensterscheibe und/oder die Fensterscheibe ist eine Glasscheibe aus gehärtetem bzw. vorgespanntem Glas, vorliegend ein Einscheiben-Sicherheitsglas (ESG) mit Zulassung bzw. Eignung für sogenannte Autoseitenscheiben. Eine derartige Ausgestaltung ermöglicht einen einfachen Austausch bestehender Scheiben an Fahrzeugen, welche zu einem Wohn- bzw. Reisemobil umgerüstet werden.

Dieser Lösung liegt die Erkenntnis zugrunde, dass insbesondere beim Umbau von Fahrzeugen zu Wohn- bzw. Reisemobilen in der Regel Fahrzeuge verwendet werden, welche bereits über in bzw. an der Fahrzeugkarosserie angeordnete Festverglasungen verfügen. Entsprechend der vorgeschlagenen Lösung können diese Festverglasungen durch eine erfindungsgemäße Fensterkonstruktion ausgetauscht werden, wodurch die vorgenannten im Stand der Technik existierenden Nachteile vermieden werden.

Vorteilhafterweise umfasst die Fensterkonstruktion wenigstens eine weitere in der Hauptfensterscheibe vorgesehene und mit einer sich öffnen lassenden Fensterscheibe verschließbare Fensteröffnung. Dadurch kann ein erhöhter Austausch mit einer Umgebungsluft erzielt werden.

Die Fensterkonstruktion umfasst eine zumindest teilweise innerhalb der Fensteröffnung angeordnete Rahmenkonstruktion, welche einen inneren Rahmen und einen damit verbundenen äußeren Rahmen umfasst. Eine solche Rahmenkonstruktion erlaubt es, die sich öffnen lassende Fensterscheibe platzsparend und dennoch fest an der Hauptfensterscheibe zu befestigen.

Die sich öffnen lassende Fensterscheibe ist schwenkbar an dem äußeren Rahmen gehalten. Eine derartige Verschwenkbarkeit, insbesondere nach oben, hat den Vorteil, dass ein besserer Schutz vor Witterungseinflüssen wie beispielsweise Regen gewährleistet werden kann.

Vorteilhafterweise umfasst die Fensterkonstruktion eine an dem inneren Rahmen angeordnete Insektenschutzvorrichtung. Eine derartige Konstruktion ermöglicht es auf einfache Art und Weise, einen Schutz vor Insekten bereitzustellen, ohne erhebliche konstruktive Modifikationen an der Fensterkonstruktion vornehmen zu müssen. Eine solche Insektenschutzvorrichtung kann vorteilhafterweise beispielsweise auch nachträglich installiert werden.

Vorzugsweise umfasst die Insektenschutzvorrichtung einen Rahmen und ein darin horizontal oder vertikal beweglich angeordnetes Element. Dies erlaubt eine besonders platzsparende Konstruktion, beispielsweise im Vergleich zu einer nach innen schwenkbar angeordneten Schutzvorrichtung.

In einer bevorzugten Ausgestaltung ist das beweglich angeordnete Element als Rollo oder als Plissee ausgebildet. Alternativ ist das beweglich angeordnete Element als eine Lamellen umfassende Jalousie ausgebildet. Die vorgenannten Ausgestaltungen haben allesamt den Vorteil, dass im ungenutzten Zustand nur ein vergleichsweise kleiner Raum zur Verstauung des beweglich angeordneten Elements erforderlich ist.

Vorteilhafterweise umfasst das beweglich angeordnete Element ein Griffelement, insbesondere eine Griffleiste. Dadurch wird einem Nutzer ein komfortables Betätigen der Insektenschutzvorrichtung ermöglicht.

Vorzugsweise umfasst die Fensterkonstruktion wenigstens eine an der sich öffnen lassenden Fensterscheibe vorgesehene Gasdruckfeder. Dies ermöglicht ein besonders einfaches Öffnen der Fensterscheibe mit geringem Kraftaufwand.

In einer bevorzugten Ausgestaltung umfasst die Fensterkonstruktion ferner wenigstens ein an der sich öffnen lassenden Fensterscheibe vorgesehenes Verriegelungselement. Vorteilhafterweise umfasst die Fensterkonstruktion wenigstens ein mit dem wenigstens einen Verriegelungselement zusammenwirkendes Rastelement. Damit ist es auf einfache Art und Weise möglich, ein Öffnen der Fensterkonstruktion von außerhalb des Reisemobils zu verhindern. Das wenigstens eine Verriegelungselement der erfindungsgemäßen Fensterkonstruktion ist vorteilhafterweise derart ausgestaltet, dass in Schließstellung der Fensterscheibe in der Hauptfensterscheibe der Fensterkonstruktion ein vorbestimmter bzw. definierter Anpressdruck gegenüber einer umlaufenden Dichtung zwischen Hauptfensterscheibe und Fensterscheibe der Fensterkonstruktion gegeben bzw. sicherstellbar ist. So werden vorteilhafterweise etwaige Undichtigkeiten, welche ansonsten bei vorbekannten Fensterkonstruktionen von sogenannten Aufstellfenstern, zumindest nach ein paar Jahren Gebrauchszeit, gegeben sind, vermieden. Vorteilhafterweise ist der Anpressdruck einstellbar, so dass ein Nachstellen des Anpressdrucks zur Vermeidung etwaiger Undichtigkeiten ermöglicht ist, insbesondere um zumindest nach ein paar Jahren Gebrauchszeit eine Anpassung des Anpressdrucks im Hinblick auf eine Dichtigkeit der erfindungsgemäßen Fensterkonstruktion ermöglicht ist. Bei den bisher im Stand der Technik vorbekannten Fensterkonstruktionen von sogenannten Aufstellfenstern ist im Falle von derartig auftretenden Undichtigkeiten in der Regel ein kostenintensiver Austausch der Fensterkonstruktion erforderlich, der erfindungsgemäß vermieden werden kann. Vorteilhafterweise ist die mit einer sich öffnen lassenden Fensterscheibe verschließbare Fensteröffnung und dementsprechend auch die Fensterscheibe rechteckig bzw. viereckig mit leicht gerundeten Ecken ausgestaltet. Bei entsprechender Anordnung vorteilhafterweise jeweils eines Verriegelungselements in den entsprechenden gerundeten Ecken bzw. mit Druckeinleitung über diese gerundeten Ecken ist in Schließstellung der Fensterkonstruktion und Aktivierung der Verriegelungen vorteilhafterweise ein Anpressdruck erzeugbar, der Undichtigkeiten der erfindungsgemäßen Fensterkonstruktion vermeidet.

Weitere Einzelheiten, Merkmale und Vorteile der Erfindung werden nachfolgend anhand der in den Figuren der Zeichnungen dargestellten Ausführungsbeispiele näher erläutert.

Dabei zeigen:
- Fig. 1: in einer perspektivischen Ansicht ein Ausführungsbeispiel einer erfindungsgemäßen Fensterkonstruktion in geöffnetem Zustand, betrachtet von der Außenseite der Hauptfensterscheibe außerhalb eines Wohn- bzw. Reisemobils;
- Fig. 2: in einer perspektivischen Ansicht ein Ausführungsbeispiel einer erfindungsgemäßen Fensterkonstruktion in geöffnetem Zustand, betrachtet von einem Innenraum eines Wohn- bzw. Reisemobils aus;
- Fig. 3: in einer schematischen Schnittansicht ein Ausführungsbeispiel einer erfindungsgemäßen Fensterkonstruktion in geöffnetem Zustand; und
- Fig. 4: in einer perspektivischen Detailansicht ein zweites Ausführungsbeispiel einer erfindungsgemäßen Fensterkonstruktion in geöffnetem Zustand, betrachtet von der Innenseite der Hauptfensterscheibe.

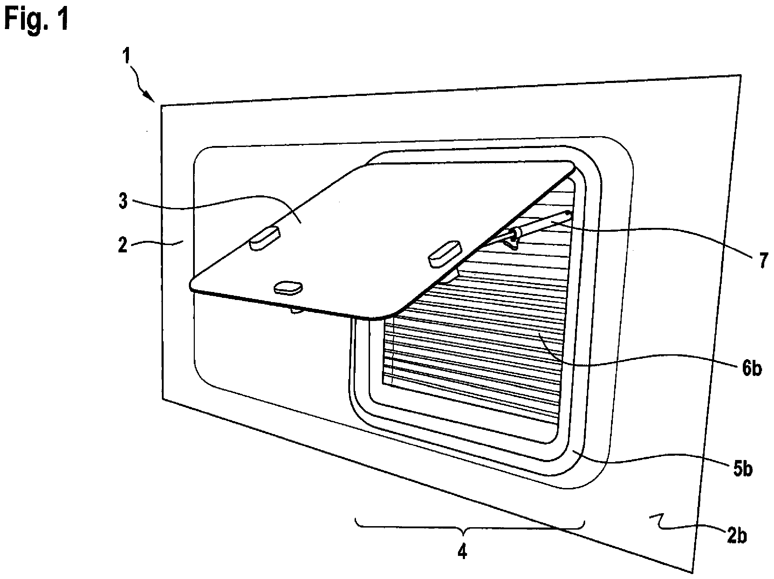

Fig. 1 zeigt in einer perspektivischen Ansicht ein Ausführungsbeispiel einer erfindungsgemäßen Fensterkonstruktion 1 in geöffnetem Zustand. Die in Fig. 1 von einer Außenseite 2b einer Hauptfensterscheibe 2 gezeigte Fensterkonstruktion 1 umfasst die Hauptfensterscheibe 2 mit der in einen Innenraum eines Wohn- bzw. Reisemobils richtbaren Innenseite 2a (in Fig. 1 nicht sichtbar) und einer dieser gegenüberliegenden Außenseite 2b.

In der Hauptfensterscheibe 2 ist vorliegend eine Fensteröffnung 4 vorgesehen, welche mit einer sich öffnen lassenden Fensterscheibe 3 verschließbar ist. Sowohl die Hauptfensterscheibe 2 als auch die sich öffnen lassende Fensterscheibe 3 bestehen aus gehärtetem bzw. vorgespanntem Glas, vorliegend ein Einscheiben-Sicherheitsglas (ESG), insbesondere mit Zulassung bzw. Eignung für sogenannte Autoseitenscheiben. Die mit einer sich öffnen lassenden Fensterscheibe 3 verschließbare Fensteröffnung 4 und dementsprechend auch die Fensterscheibe 3 sind rechteckig bzw. viereckig mit leicht gerundeten Ecken ausgestaltet.

Wie weiter anhand von Fig. 1 erkennbar, ist die sich öffnen lassende Fensterscheibe 3 schwenkbar an einem äußeren Rahmen 5b gehalten. Hierzu sind entsprechende Scharniere an einer Oberseite des Rahmens 5b vorgesehen. Um ein Öffnen der Fensterscheibe 3 zu erleichtern, umfasst die Fensterkonstruktion 1 ferner wenigstens eine an selbiger vorgesehene Gasdruckfeder 7, mittels welcher die Fensterscheibe 3 nach außen, d.h. vom Wohn- bzw. Reisemobil weg, bewegt werden kann.

In den Innenraum des Wohn- bzw. Reisemobils gerichtet ist des Weiteren ein beweglich angeordnetes Element 6b vorgesehen, welches vorliegend als eine Lamellen umfassende Jalousie ausgebildet ist. Dieses Element 6b dient dem Schutz vor Insekten und der Verdunkelung des Innenraums eines Wohn- bzw. Reisemobils.

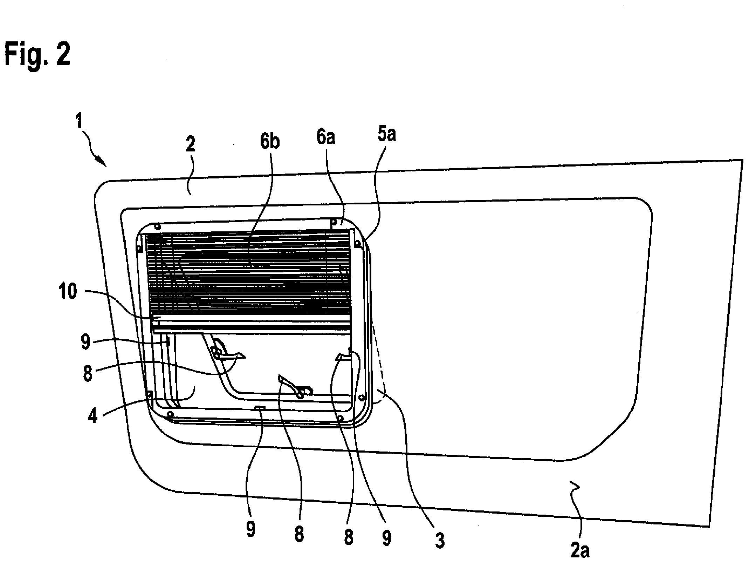

Fig. 2 zeigt in einer perspektivischen Ansicht ein Ausführungsbeispiel einer erfindungsgemäßen Fensterkonstruktion 1 in geöffnetem Zustand, welche nunmehr von einer Innenseite 2a der Hauptfensterscheibe 2 aus gezeigt ist.

Als weiteren Bestandteil umfasst die Fensterkonstruktion 1 einen inneren Rahmen 5a, welcher auf der Innenseite 2a der Hauptfensterscheibe 2 angeordnet und mit dem (in Fig. 1 sichtbaren) äußeren Rahmen 5b verbunden ist. Die Rahmen 5a und 5b bilden demnach eine Rahmenkonstruktion 5. Auf dem inneren Rahmen 5a ist ferner, in den Innenraum des Wohn- bzw. Reisemobils gerichtet, ein Rahmen 6a einer Insektenschutzvorrichtung 6 befestigt. Diese Insektenschutzvorrichtung 6 umfasst als weiteren Bestandteil ein darin vorliegend vertikal beweglich angeordnetes Element 6b, hier in Form einer Lamellen umfassenden Jalousie.

Um eine gute Bedienbarkeit der Insektenschutzvorrichtung 6 durch einen Nutzer zu gewährleisten, umfasst das beweglich angeordnete Element 6b ein Griffelement 10, hier in Form einer horizontal verlaufenden Griffleiste.

Im Gegensatz zu Fig. 1 ist in Fig. 2 ferner gut erkennbar, dass an der sich öffnen lassenden Fensterscheibe 3 insgesamt drei Verriegelungselemente 8 vorgesehen sind. Diese Verriegelungselemente 8 wirken mit drei korrespondierend dazu am inneren Rahmen 5a angeordneten Rastelementen 9 zusammen.

Ein Verriegelungselement 8 ist dabei drehbar gelagert und kann durch entsprechende Drehung mit dem korrespondierenden Rastelement 9 in Eingriff gebracht werden. Um ein versehentliches Lösen des Verriegelungselements 8 zu verhindern, kann optional ein Auslöseelement, vorzugsweise ein Auslöseknopf, vorgesehen sein, welches zunächst betätigt werden muss, um eine Drehung des Verriegelungselements 8 durchführen zu können.

Die Verriegelungselemente 8 sind derart ausgestaltet, dass in Schließstellung der Fensterscheibe 3 in der Fensteröffnung 4 der Hauptfensterscheibe 2 ein vorbestimmter bzw. definierter Anpressdruck gegenüber einer umlaufenden Dichtung zwischen Hauptfensterscheibe 2 und Fensterscheibe 3 der gegeben bzw. sicherstellbar ist. Dabei ist der Anpressdruck vorzugsweise einstellbar, insbesondere derart, dass ein Nachstellen des Anpressdrucks zur Vermeidung etwaiger Undichtigkeiten ermöglicht ist, insbesondere nach Einbau der Fensterkonstruktion 1 in ein Wohn- bzw. Reisemobil bzw. einem zu diesem umzubauenden Kastenwagen.

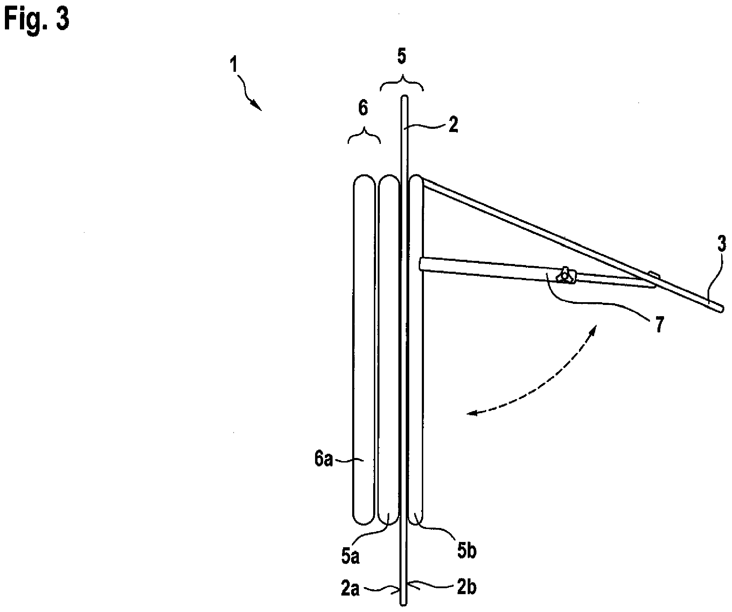

Fig. 3 zeigt in einer schematischen Schnittansicht ein Ausführungsbeispiel einer erfindungsgemäßen Fensterkonstruktion 1 in geöffnetem Zustand. Wie vorstehend erläutert, umfasst die Fensterkonstruktion 1 eine zumindest teilweise innerhalb der (in Fig. 3 nicht sichtbaren) Fensteröffnung 4 angeordnete Rahmenkonstruktion 5, welche einen an einer Innenseite 2a der Hauptfensterscheibe 2 angeordneten inneren Rahmen 5a und einen damit verbundenen an einer Außenseite 2b der Hauptfensterscheibe 2 angeordneten äußeren Rahmen 5b umfasst.

Dabei überlappt wenigstens ein Teil des inneren Rahmens 5a und/oder des äußeren Rahmens 5b eine Innenkante der Fensteröffnung 4 insoweit, als dass eine Verbindung von innerem Rahmen 5a und äußerem Rahmen 5b ermöglicht wird. Eine solche Verbindung kann beispielsweise mittels Verklebung und/oder Verschraubung realisiert sein.

Die Innenkante der Fensteröffnung 4 ist vorzugsweise mittels einer umlaufenden Dichtung versehen, durch welche ein luftdichter Abschluss zwischen der Rahmenkonstruktion 5 und der Fensteröffnung 4 erreicht wird.

An dem inneren Rahmen 5a ist eine Insektenschutzvorrichtung 6 angeordnet, indem ein Rahmen 6a der Insektenschutzvorrichtung 6 mit dem inneren Rahmen verbunden wird, beispielsweise durch Kleben und/oder Schrauben. Innerhalb des Rahmens 6a der Insektenschutzvorrichtung 6 ist ein (in Fig. 3 nicht sichtbares) horizontal oder vertikal beweglich angeordnetes Element 6b vorgesehen.

Die sich öffnen lassende Fensterscheibe 3 ist schwenkbar (in Fig. 3 stilisiert dargestellt durch den Doppelpfeil) an dem äußeren Rahmen 5b gehalten, beispielsweise mittels entsprechender Scharniere und zur Ermöglichung eines einfachen Öffnens mit wenigstens einer Gasdruckfeder verbunden. Das andere Ende der Gasdruckfeder, welches nicht an der sich öffnen lassenden Fensterscheibe 3 befestigt ist, kann entweder am äußeren Rahmen 5b oder am inneren Rahmen 5a befestigt sein.

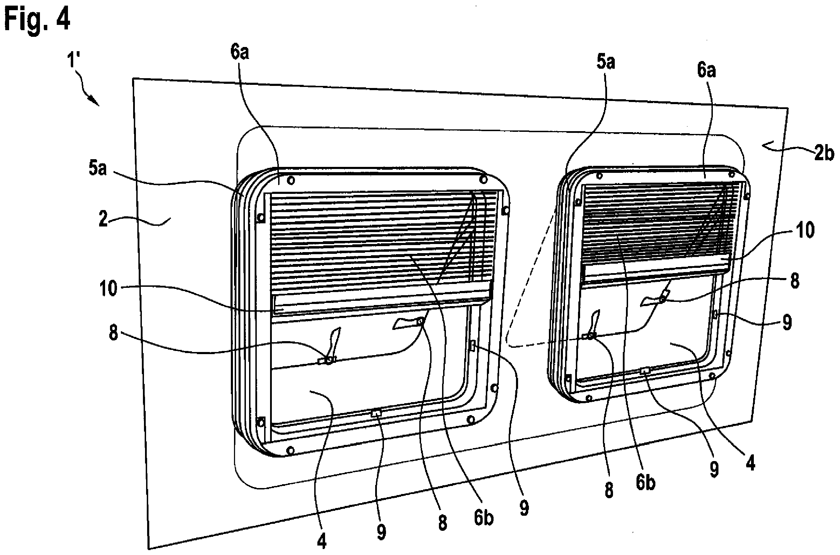

Fig. 4 zeigt in einer perspektivischen Detailansicht ein zweites Ausführungsbeispiel einer erfindungsgemäßen Fensterkonstruktion 1' in geöffnetem Zustand, ebenfalls betrachtet von einer Innenseite 2a einer Hauptfensterscheibe 2 aus.

Diese Fensterkonstruktion 1' umfasst ebenfalls die Hauptfensterscheibe 2 mit der in einen Innenraum des Wohn- bzw. Reisemobils richtbaren Innenseite 2a und einer dieser gegenüberliegenden Außenseite 2b (in Fig. 4 nicht sichtbar).

Vorliegend sind in der Fensterkonstruktion 1' zwei Fensteröffnungen 4 vorgesehen, welche jeweils mit einer sich öffnen lassenden Fensterscheibe 3 verschließbar sind.

Hinsichtlich der Ausgestaltung der an der jeweiligen Fensteröffnung 4 vorgesehenen Elemente wird auf die Fig. 1 bis 3 verwiesen, welche in gleicher Weise für Fig. 4 anwendbar sind.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

### Bezugszeichenliste:

- 1, 1': Fensterkonstruktion
- 2: Hauptfensterscheibe
- 2a: Innenseite der Hauptfensterscheibe
- 2b: Außenseite der Hauptfensterscheibe
- 3: sich öffnen lassende Fensterscheibe
- 4: Fensteröffnung
- 5: Rahmenkonstruktion
- 5a: innerer Rahmen der Rahmenkonstruktion
- 5b: äußerer Rahmen der Rahmenkonstruktion
- 6: Insektenschutzvorrichtung
- 6a: Rahmen der Insektenschutzvorrichtung
- 6b: beweglich angeordnetes Element der Insektenschutzvorrichtung
- 7: Gasdruckfeder
- 8: Verriegelungselement
- 9: Rastelement
- 10: Griffelement

## Patentansprüche

1. Fensterkonstruktion (1, 1') für ein Wohn- bzw. Reisemobil, umfassend eine Hauptfensterscheibe (2) mit einer in einen Innenraum des Wohn- bzw. Reisemobils richtbaren Innenseite (2a) und einer dieser gegenüberliegenden Außenseite (2b), und
eine in der Hauptfensterscheibe (2) vorgesehene und mit einer sich öffnen lassenden Fensterscheibe (3) verschließbare Fensteröffnung (4),
wobei die Hauptfensterscheibe (2) und die sich öffnen lassende Fensterscheibe (3) aus gehärtetem bzw. vorgespanntem Glas bestehen,
**dadurch gekennzeichnet, dass**
die Fensterkonstruktion (1, 1') ferner eine zumindest teilweise innerhalb der Fensteröffnung (4) angeordnete Rahmenkonstruktion (5) umfasst, welche einen inneren Rahmen (5a) und einen damit verbundenen äußeren Rahmen (5b) umfasst,
wobei der innere Rahmen (5a) auf der Innenseite (2a) der Hauptfensterscheibe (2) und der äußere Rahmen (5b) auf der Außenseite (2b) der Hauptfensterscheibe (2) angeordnet ist,
die sich öffnen lassende Fensterscheibe (3) schwenkbar an dem äußeren Rahmen (5b) gehalten ist,
zwischen Hauptfensterscheibe (2) und Fensterscheibe (3) eine umlaufende Dichtung vorgesehen ist, und
die Hauptfensterscheibe (2) und die sich öffnen lassende Fensterscheibe (3) eine Glasscheibe aus einem Einscheiben-Sicherheitsglas (ESG) mit Zulassung bzw. Eignung für Autoseitenscheiben ist.

2. Fensterkonstruktion (1, 1') nach Anspruch 1, ferner umfassend wenigstens eine weitere in der Hauptfensterscheibe (2) vorgesehene und mit einer sich öffnen lassenden Fensterscheibe (3) verschließbare Fensteröffnung (4).

3. Fensterkonstruktion (1, 1') nach Anspruch 1, ferner umfassend eine an dem inneren Rahmen (5a) angeordnete Insektenschutzvorrichtung (6).

4. Fensterkonstruktion (1, 1') nach Anspruch 3, wobei die Insektenschutzvorrichtung (6) einen Rahmen (6a) und ein darin horizontal oder vertikal beweglich angeordnetes Element (6b) umfasst.

5. Fensterkonstruktion (1, 1') nach Anspruch 4, wobei das beweglich angeordnete Element (6b) als Rollo oder als Plissee ausgebildet ist.

6. Fensterkonstruktion (1, 1') nach Anspruch 4, wobei das beweglich angeordnete Element (6b) als eine Lamellen umfassende Jalousie ausgebildet ist.

7. Fensterkonstruktion (1, 1') nach einem der Ansprüche 4 bis 6, wobei das beweglich angeordnete Element (6b) ein Griffelement (10), insbesondere eine Griffleiste, umfasst.

8. Fensterkonstruktion (1, 1') nach einem der Ansprüche 1 bis 7, ferner umfassend wenigstens eine an der sich öffnen lassenden Fensterscheibe (3) vorgesehene Gasdruckfeder (7).

9. Fensterkonstruktion (1, 1') nach einem der Ansprüche 1 bis 8, ferner umfassend wenigstens ein an der sich öffnen lassenden Fensterscheibe (3) vorgesehenes Verriegelungselement (8).

10. Fensterkonstruktion (1, 1') nach Anspruch 9, ferner umfassend wenigstens ein mit dem wenigstens einen Verriegelungselement (8) zusammenwirkendes Rastelement (9).

11. Fensterkonstruktion (1, 1') nach Anspruch 9 oder Anspruch 10, wobei das wenigstens eine Verriegelungselement (8) derart ausgestaltet, dass in Schließstellung der Fensterscheibe (3) in der Hauptfensterscheibe (2) ein vorbestimmter bzw. definierter Anpressdruck gegenüber der umlaufenden Dichtung zwischen der Hauptfensterscheibe (2) und der Fensterscheibe (3) gegeben bzw. sicherstellbar ist.

12. Fensterkonstruktion (1, 1') nach Anspruch 11, wobei der Anpressdruck einstellbar ist, derart, dass ein Nachstellen des Anpressdrucks zur Vermeidung etwaiger Undichtigkeiten ermöglicht ist.

13. Fensterkonstruktion (1, 1') nach einem der Ansprüche 1 bis 12, wobei die mit einer sich öffnen lassenden Fensterscheibe (3) verschließbare Fensteröffnung (4) und dementsprechend auch die Fensterscheibe (3) rechteckig bzw. viereckig mit leicht gerundeten Ecken ausgestaltet ist, und jeweils ein Verriegelungselement (8) in den entsprechenden gerundeten Ecken bzw. mit Druckeinleitung über diese gerundeten Ecken vorgesehen ist, so dass in Schließstellung der Fensterscheibe (3) in der Hauptfensterscheibe (2) und Aktivierung der Verriegelungselemente (8) ein Undichtigkeiten vermeidender Anpressdruck gegenüber der umlaufenden Dichtung zwischen der Hauptfensterscheibe (2) und der Fensterscheibe (3) erzeugbar bzw. erzeugt ist.

## Claims

1. A window structure (1, 1') for a mobile home or camper van, comprising
a main window pane (2) with an inner side (2a) which can be directed into an interior of the mobile home or camper van and an outer side (2b) opposite thereto, and
a closable window opening (4) provided in the main window pane (2) and with an openable window pane (3),
wherein the main window pane (2) and the openable window pane (3) are made of tempered or toughened glass,
**characterised in that**
the window structure (1, 1') further comprises a frame construction (5) arranged at least partially within the window opening (4), which comprises an inner frame (5a) and an outer frame (5b) connected thereto,
wherein the inner frame (5a) is arranged on the inner side (2a) of the main window pane (2) and the outer frame (5b) is arranged on the outer side (2b) of the main window pane (2),
the openable window pane (3) is held pivotably on the outer frame (5b),
a circumferential seal is provided between the main window pane (2) and the window pane (3), and
the main window pane (2) and the openable window pane (3) is a glass pane made of toughened safety glass (ESG) with approval or suitability for car side windows.

2. The window structure (1, 1') according to claim 1, further comprising at least one further closable window opening (4) provided in the main window pane (2) and with an openable window pane (3).

3. The window structure (1, 1') according to claim 1, further comprising an insect protection device (6) arranged on the inner frame (5a).

4. The window structure (1, 1') according to claim 3, wherein the insect protection device (6) comprises a frame (6a) and an element (6b) arranged therein so as to be horizontally or vertically movable.

5. The window structure (1, 1') according to claim 4, wherein the movably arranged element (6b) is designed as a roller blind or pleated blind.

6. The window structure (1, 1') according to claim 4, wherein the movably arranged element (6b) is designed as a jalousie comprising slats.

7. The window structure (1, 1') according to one of claims 4 to 6, wherein the movably arranged element (6b) comprises a handle element (10), in particular a handle strip.

8. The window structure (1, 1') according to one of claims 1 to 7, further comprising at least one gas pressure spring (7) provided on the openable window pane (3).

9. The window structure (1, 1') according to one of claims 1 to 8, further comprising at least one locking element (8) provided on the openable window pane (3).

10. The window structure (1, 1') according to claim 9, further comprising at least one latching element (9) co-operating with the at least one locking element (8).

11. The window structure (1, 1') according to claim 9 or claim 10, wherein the at least one locking element (8) is designed in such a way that in the closed position of the window pane (3) in the main window pane (2) a predetermined or defined contact pressure is provided or can be ensured with respect to the circumferential seal between the main window pane (2) and the window pane (3).

12. The window structure (1, 1') according to claim 11, wherein the contact pressure is adjustable in such a way that it is possible to readjust the contact pressure to prevent any leaks.

13. The window structure (1, 1') according to one of claims 1 to 12, wherein the window opening (4), which can be closed with an openable window pane (3), and correspondingly also the window pane (3) is rectangular or square with slightly rounded corners, and a locking element (8) is provided in each of the corresponding rounded corners or with pressure introduction via these rounded corners, so that in the closed position of the window pane (3) in the main window pane (2) and activation of the locking elements (8), a contact pressure which prevents leaks can be generated or is generated to the circumferential seal between the main window pane (2) and the window pane (3).

## Revendications

1. Structure de fenêtre (1, 1') pour un véhicule d'habitation ou un camping-car, comprenant
une vitre principale (2) avec une face intérieure (2a) pouvant être orientée vers un espace intérieur du véhicule d'habitation ou du camping-car et une face extérieure (2b) opposée à celle-ci, et
une ouverture de fenêtre (4) prévue dans la vitre principale (2) et pouvant être fermée par une vitre (3) pouvant être ouverte,
la vitre principale (2) et la vitre (3) pouvant être ouverte étant en verre trempé ou durci,
**caractérisé en ce que**
la structure de fenêtre (1, 1') comprend en outre une construction de cadre (5) disposée au moins partiellement à l'intérieur de l'ouverture de fenêtre (4), qui comprend un cadre intérieur (5a) et un cadre extérieur (5b) relié à celui-ci,
dans lequel le cadre intérieur (5a) est disposé sur le côté intérieur (2a) de la vitre principale (2) et le cadre extérieur (5b) est disposé sur le côté extérieur (2b) de la vitre principale (2),
la vitre (3) pouvant être ouverte est maintenue de manière pivotante sur le cadre extérieur (5b),
un joint d'étanchéité périphérique est prévu entre la vitre principale (2) et la vitre (3), et
la vitre principale (2) et la vitre (3) pouvant être ouverte sont des vitres en verre de sécurité trempé homologuées ou adaptées aux vitres latérales des voitures.

2. Structure de fenêtre (1, 1') selon la revendication 1, comprenant en outre au moins une autre ouverture de fenêtre (4) prévue dans la vitre principale (2) et pouvant être fermée par une vitre (3) pouvant être ouverte.

3. Structure de fenêtre (1, 1') selon la revendication 1, comprenant en outre un dispositif de moustiquaire (6) disposé sur le cadre intérieur (5a).

4. Structure de fenêtre (1, 1') selon la revendication 3, dans laquelle le dispositif de moustiquaire (6) comprend un cadre (6a) et un élément (6b) disposé de manière mobile horizontalement ou verticalement dans celui-ci.

5. Structure de fenêtre (1, 1') selon la revendication 4, dans laquelle l'élément (6b) disposé de manière mobile est réalisé sous forme de store ou de plissé.

6. Structure de fenêtre (1, 1') selon la revendication 4, dans laquelle l'élément (6b) disposé de manière mobile est conçu comme un store vénitien comprenant des lamelles.

7. Structure de fenêtre (1, 1') selon l'une des revendications 4 à 6, dans laquelle l'élément (6b) disposé de manière mobile comprend un élément de poignée (10), en particulier une barre de poignée.

8. Structure de fenêtre (1, 1') selon l'une des revendications 1 à 7, comprenant en outre au moins un ressort à gaz (7) prévu sur la vitre (3) pouvant être ouverte.

9. Structure de fenêtre (1, 1') selon l'une des revendications 1 à 8, comprenant en outre au moins un élément de verrouillage (8) prévu sur la vitre (3) pouvant être ouverte.

10. Structure de fenêtre (1, 1') selon la revendication 9, comprenant en outre au moins un élément d'encliquetage (9) coopérant avec ledit au moins un élément de verrouillage (8).

11. Structure de fenêtre (1, 1') selon la revendication 9 ou la revendication 10, l'au moins un élément de verrouillage (8) étant conçu de telle sorte qu'en position de fermeture de la vitre (3) pouvant être ouverte dans la vitre principale (2), une pression d'appui prédéterminée ou définie est donnée ou peut être assurée par rapport au joint d'étanchéité périphérique entre la vitre principale (2) et la vitre (3).

12. Structure de fenêtre (1, 1') selon la revendication 11, dans laquelle la pression d'appui est réglable, de manière à permettre un réajustement de la pression d'appui pour éviter d'éventuelles fuites.

13. Structure de fenêtre (1, 1') selon l'une des revendications 1 à 12, dans laquelle l'ouverture de fenêtre (4) pouvant être fermée par une vitre (3) pouvant être ouverte et en conséquence, également la vitre (3) pouvant être ouverte sont de forme rectangulaire ou quadrangulaire avec des coins légèrement arrondis, et un élément de verrouillage (8) est prévu dans les coins arrondis correspondants ou avec introduction de la pression par ces coins arrondis, de sorte qu'en position de fermeture de la vitre (3) dans la vitre principale (2) et activation des éléments de verrouillage (8), une pression d'appui évitant les fuites peut être ou est générée par rapport au joint périphérique entre la vitre principale (2) et la vitre (3).
